**Europäisches Patentamt**

**European Patent Office**

**Office européen des brevets**

(11) Veröffentlichungsnummer: **0 259 718**
**B1**

(12)

# EUROPÄISCHE PATENTSCHRIFT

(45) Veröffentlichungstag der Patentschrift:
**24.10.90**

(51) Int. Cl.⁵: **B23K 37/04, B23K 11/30**

(21) Anmeldenummer: **87112523.3**

(22) Anmeldetag: **28.08.87**

(54) Verfahren zum Zusammenfügen einzelner Bauelemente.

(30) Priorität: **12.09.86 DE 3631154**

(43) Veröffentlichungstag der Anmeldung:
**16.03.88 Patentblatt 88/11**

(45) Bekanntmachung des Hinweises auf die Patenterteilung:
**24.10.90 Patentblatt 90/43**

(84) Benannte Vertragsstaaten:
**DE FR GB IT SE**

(56) Entgegenhaltungen:
**EP-A- 0 257 440**
**US-A- 3 194 940**

**DIN ISO 1089**

(73) Patentinhaber: **MTU MOTOREN- UND TURBINEN-UNION MÜNCHEN GMBH, Dachauer Strasse 665 Postfach 50 06 40, D-8000 München 50(DE)**

(72) Erfinder: **Nustede, Fritz, Wehrstaudenstrasse 10, D-8047 Karlsfeld(DE)**
Erfinder: **Hanninger, Josef, Tonnenweg 4, D-8061 Sixtnitgern(DE)**
Erfinder: **Schallinger, Josef, Am Schwimmbad 2, D-8221 Vachendorf(DE)**

## Beschreibung

Die Erfindung betrifft ein Verfahren zum Zusammenfügen einzelner Bauelemente durch Löten oder Schweissen mit vorhergehendem Zusammenheften der Bauteile mittels Widerstandsschweissen mit Zusatzwerkstoffen.

Es ist bekannt, zum Zweck der Zusammenführung einzelner Bauteile mittels Löten oder Schweissen diese zunächst an einigen Stellen des Randes ihrer Stossflächen zusammenzuheften. Diese Heftung erfolgt, um die Bauteile ohne grossen Aufwand vorläufig in ihre vorgesehene Position zu bringen, um in nachfolgenden Schritten die endgültige thermische Verbindung (Löten oder Schweissen) durchführen zu können.

Insbesondere sinnvoll ist der Heftvorgang bei Fügeverfahren, bei denen zwischen den Stossstellen der Bauteile zunächst ein geringer Spalt verbleiben muss, der mit Fügematerial ausgefüllt wird, wobei nach Erhitzen und Schmelzen des Fügematerials eine feste Verbindung der Bauteile entsteht.

Bei den hierfür verwendeten Heftverfahren werden übliche Schweissverfahren wie das Wolfram-Inertgasschweissen (WIG), das Metall-Inertgasschweissen (MIG) oder das Laserstrahlschweissen angewandt.

Nachteilig bei diesem Heftverfahren wirkt sich aus, dass der Fertigungsaufwand und die Qualitätskontrolle sehr hoch und damit teuer ist. Gravierend wirkt sich ausserdem aus, dass die Wärmeausbreitung an der Heftstelle schwer zu kontrollieren ist. Dieser durch Anlauffärbung der Umgebung erkennbare Effekt bewirkt, dass der Spalt zwischen den zu verbindenden Bauteilen verändert wird (Verzug), oder dass Spannungen in den Bauteilen entstehen. Weiterhin nachteilig ist die Bildung unerwünschter Oxidationsschichten auf den erhitzten Oberflächen.

In der US-A 3 194 940 ist ein Verfahren zum Punktschweissen mittels kugelförmigem Schweissmaterial beschrieben, bei dem eine oszillierend bewegbare Elektrode an ihrer konischen Spitze eine Einsenkung aufweist, zur Aufnahme des kugelförmigen Schweissgutes. Die Vereinzelung des in einem Behälter gelagerten Kugelmaterials geschieht dadurch, dass die Elektrode von unten durch Kugelhaufen hindurchgeführt wird, wobei sich eine einzelne Kugel in der Absenkung absetzt. Der wesentliche Nachteil dieses Verfahrens besteht darin, dass zum einen nur solche Flächen verschweisst werden können, die von unten zugänglich sind. Das bedeutet, dass anstelle der leichten Elektrode häufig das grössere und schwerere oder die grösseren zu verbindenden Bauteile bewegt werden müssen. Zum zweiten ist nicht gewährleistet, dass stets eine Kugel in der dafür vorgesehenen Einsenkung zum Liegen kommt.

Die nachveröffentlichte EP-A 0 257 440 betrifft ein Verfahren zur Herstellung einer Kolbenstange, die aus einem Stab und einer an einem Ende untergebrachten Kugel besteht. Dabei wird die Kugel mittels Unterdruck an einer Elektrode einer Elektroschweissanlage gehalten, während der an einer anderen Elektrode befestigte Stab gegen die Kugel gedrückt wird. Durch den Schweissstrom werden Kugel und Stab zusammengeschweisst. Dabei wird Unterdruck nur zur Fixierung eines der beiden zusammenzufügenden Bauteile verwendet, nicht jedoch zur Positionierung von Schweissgut.

Aus der Norm DIN 1 501 089 ist eine Hohlelektrode bekannt.

Aufgabe der Erfindung ist es, die im Stand der Technik aufgezeigten Nachteile zu vermeiden und ein Fügeverfahren, insbesondere zum Heften zu schaffen, bei dem unter geringem Fertigungsaufwand eine exakte und verzugsarme Verbindung erreichbar ist.

Erfindungsgemäss wird diese Aufgabe dadurch gelöst, dass mittels einer hohlen Schweisselektrode kugelförmiges Heftmaterial durch Unterdruck aus einem Vorratsbehälter entnommen wird, der Heftstelle zugeführt und dort mittels Stromdurchgang aufgeschmolzen wird.

Die wesentlichen Vorteile der Erfindung sind:

Zur Durchführung des Verfahrens eignet sich ein einfaches und preiswertes elektrisches Widerstandsschweissgerät, das ohne aufwendige Zuführung von Schutzgas arbeitet.

Die Aufbringung des kugelförmigen Heftmaterials geschieht sehr schnell und unkompliziert dadurch, dass die Schweisselektrode zunächst mit in einem Vorratsbehälter befindlichen Heftmaterial-Kugeln in Kontakt gebracht wird, wodurch automatisch ein Kugel angesaugt wird. Durch nachfolgendes Inkontaktbringen der Kugel mit der Heftstelle wird der Stromkreis des angeschlossenen Widerstandsschweissgerätes geschlossen und die Kugel aufgeschmolzen.

Es lässt sich dadurch neben der einfachen Heftmaterialzuführung eine exakte Dosierung derselben erreichen, wobei die zugeführte Wärmemenge an die vorliegenden Bedingungen anpasst wird. Somit wird eine übermässige Wärmezufuhr mit den oben geschilderten Nachteilen auf einfache Weise vermieden. Durch die angepasste Wärmezufuhr lassen sich Oxidation, Verzug und Spannungsbildung vermeiden.

Der Zeitbedarf für die Herstellung einer Heftverbindung und deren Qualitätskontrolle lässt sich erheblich senken beispielsweise gegenüber dem WIG-Schweissen um etwa die Hälfte. Vorteilhafterweise ist zudem der Anteil des erzeugten Auschusses erheblich geringer. Die erforderlichen Heftmaterial-Kugeln sind ausserdem preiswert am Markt erhältlich.

Ein Ausführungsbeispiel der Erfindung ist nachstehend anhand der Zeichnungen erläutert, ohne hierauf beschränkt zu sein. Es zeigen rein schematisch:

Fig. 1 die zu einer Struktur zu verbindenden Bauteile in einer Haltevorrichtung,
Fig. 2 die gehefteten Bauteile in einer Kontrollvorrichtung,
Fig. 3 das Punktschweissgerät für das Heften.

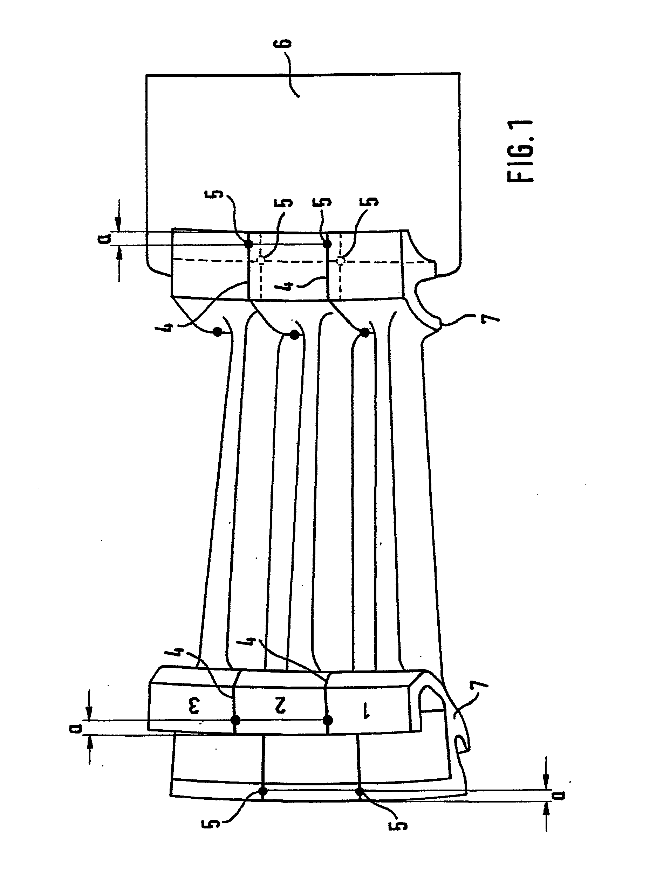

Wie Fig. 1 zu entnehmen, werden einzelne Bauelemente 1, 2 und 3, hier Schaufeln eines Rotorringes, zu einer Struktur verbunden. Dabei ist es zunächst erforderlich, vor dem Zusammenfügen die Bauelemente relativ zueinander in Position zu bringen, d.h., auf einem Abstand wie Spalt zu halten und dies geschieht mit Hilfe einer Folie 4 als Distanzmittel. An einzelnen Stellen, zu Beginn oder am Ende des Spaltes, also an den äusseren Stossstellen, erfolgt ein Heften durch Punktschweissen insbesondere kleinerer Kugeln, die so angeschweisst werden, dass sie den Spalt überbrücken und die Bauteile aneinander genügend stabil anhängen, um in dem Zeitraum bis zum Löten oder Schweissen den vorgegebenen Abstand der Bauteile zueinander im Halter 6 zu sichern.

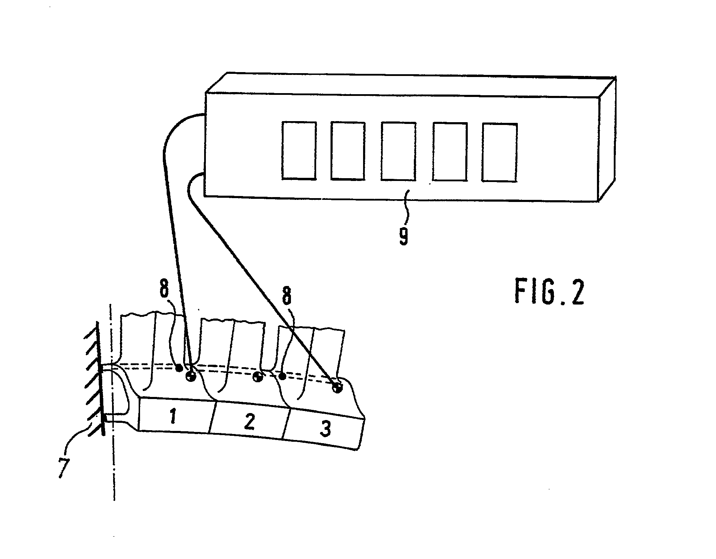

Nun kann nach Fig. 2 ein Messen der gehefteten Bauteile in einer Kontrollvorrichtung mit Bezugsebenen, wie ebenen Auflagen, relativ zu denen die Messpunkte gewählt werden, folgen. Insbesondere empfiehlt sich der Einsatz als elektronisches Mehrstellenmessgerät, bei dem an mehreren Messpunkten 8 gleichzeitig die Abstände zur Bezugsebene (Auflage bzw. Anlage 7) gemessen werden. Der Messvorgang ist somit einfach und in sehr knapper Zeit durchführbar (sogar unterhalb einer Minute). Bevorzugt wird ein elektrisch/elektronisches Messgerät 9. Die Vermessung kann jedoch auch auf optischem Wege erfolgen.

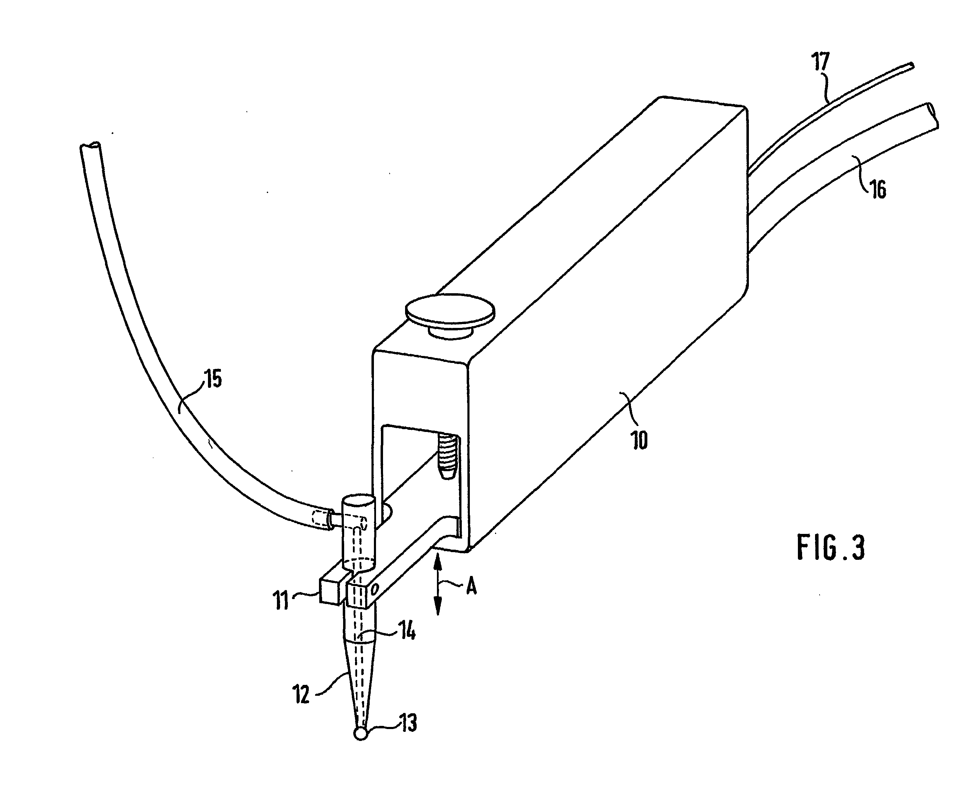

Nach dem Kontrollvorgang ist gegebenenfalls ein Verwerfen (selten) oder ein Richten erforderlich, u. U. nach einer Zwischenerwärmung. Danach erfolgt der eigentliche Löt- oder Schweissvorgang unter Zusatz eines Löt- oder Schweissmaterials (Zusatzwerkstoff), wobei sich als besonders vorteilhaft erwiesen hat, dass die Distanzfolie gleich als Lötfolie ausgebildet ist und dass man für den eigentlichen Verbindungsvorgang eine Hochtemperaturlötung wie Hochfrequenzlöten oder Erhitzung der Lötstellen mittels Induktionsspulen wählt. Solcher Lötvorgang ist an sich bekannt, statt dessen kann auch ein elektrisches Nahtschweissverfahren, wie Lichtbogenschweissen, die eigentliche Fügung der Bauteile zur Struktur übernehmen. Das Messen nach dem Heften und die Endkontrolle nach dem Schweissen (Qualitätskontrolle) kann automatisch durchgeführt werden und Teil einer automatischen Fertigungsstrasse sein. Diese kann auch eine Nachbearbeitungsstation wie Schleifstation umfassen. Gleiches gilt für die Heftstation, die als Vorrichtung eines Wiederstandsschweissgerätes mit Stosspunkter und Saugelektrode ausgeführt und in Fig. 3 dargestellt ist.

Im Gegensatz zu bekannten Verfahren, bei denen entweder ein Heften, insbesondere verzugsfreies Heften gar nicht vorgesehen war oder nur gleiche oder ähnliche Heft- wie Schweissverfahren, zeigt die erfindungsgemässe Vorrichtung erhebliche Vorteile, indem sie kleine Kugeln (ca. 1–5 mm Durchmesser) aus zum Grundwerkstoff eines Bauteils gleichem oder ähnlichem Material verwendet und dieses direkt der punktuellen Heftstelle zuführt. Dazu dient ein, wie die Pfeile A in Fig. 3 zeigen, relativ zum Spalt hin und her verschieblicher Stosspunkter 10.

Die Bewegungs- und Antriebsvorrichtung hierfür ist nicht dargestellt, sie ist an sich bekannter Art. Anstelle des Stosspunkters kann auch die gabelförmige Halterung 11 mit der Elektrode bewegbar sein oder die Elektrode 12 selbst. Die Elektrode ist hohl, mit einem zentralen Kanal 14 ausgeführt und evakuierbar durch einen Schlauch 15 der zu einer Vakuumpumpe führt und trägt an ihrem schreibseitigen Ende 13 eine Kugel 5, welche sich infolge des Vakuums in dem Kanal 14 an einem Ansatz hält. Das Wiederstandsschweissgerät 10 ist über Stromkabel 16 mit einer Stromquelle, insbesondere über Stosstransformator- nicht dargestellt- verbunden. Ebenso verbindet ein Steuerkabel 17 das Schweissgerät 10 mit einer nicht dargestellten elektronischen Steuerung an sich bekannter Art, insbesondere zur gewünschten Abgabe von Schweissimpulsen hoher Energie in entsprechendem zeitlichen Abstand.

Die Kugelzufuhr kann mit Vorteil automatisch folgen. Sie kann aus einem Reservoir durch den Hohlkanal 14 aber auch, bei der in Fig. 3 gezeigten Ausführung, durch Schwenken der Hohlelektrode über einen Behälter mit dem Kugelvorrat und zurückschwenkend zur Heftstelle, erfolgen. Andere bekannte Kugelzuführungen aus einem Reservoir sind ebenfalls anwendbar, insbesondere pneumatische (Blase-) Vorrichtungen aber auch elektrische (magnetische) Vorrichtungen.

Es kann das Heften vor dem eigentlichen Fügen nicht nur durch Widerstands-Punktschweissung, sondern auch durch ein anderes punktuelles Schweissverfahren ersetzt werden.

Anwendbare Schweissverfahren für Luft- und Raumfahrzeugbau und Superlegierungen wie hierfür verwendet sind u. a. beschrieben in W und B 119 (1986)*, Heft 2, Seite 147.

Anwendbare Lote und Lötverfahren sind z.B. der Zeitschrift Schweissen und Schneiden 33 (1981), Heft 11, Seite 594 und 595 entnehmbar.

\* Zeitschrift: "Werkstatt und Betrieb" im Carl Hanser Verlag München

## Patentansprüche

1. Verfahren zum Zusammenfügen einzelner Bauelemente durch Löten oder Schweissen mit vorhergehendem Zusammenheften der Bauteile mittels Widerstandsschweissen mit Zusatzwerkstoffen, dadurch gekennzeichnet, dass mittels einer hohlen Schweisselektrode (12) kugelförmiges Heftmaterial (5) durch Unterdruck aus einem Vorratsbehälter entnommen wird, der Heftstelle zugeführt und dort mittels Stromdurchgang aufgeschmolzen wird.

2. Verfahren nach Anspruch 1, dadurch gekennzeichnet, dass vor dem Heftvorgang in einem vorgesehenen Spalt der zusammenzufügenden Bauelemente (1, 23) eine oder mehrere Distanzfolienabschnitte (4) gebracht werden, und die Bauelemente (1, 2, 3) in der vorgesehenen Position fixiert werden.

3. Verfahren nach Anspruch 2, dadurch gekennzeichnet, dass die Distanzfolie (4) als Lötfolie ausgebildet ist, und nach dem Heftvorgang die Bauteile (1, 23) durch Temperaturerhöhung fertig verbunden werden.

4. Verfahren nach Anspruch 1 bis 3, dadurch gekennzeichnet, dass die Zuführung des Heftmaterials (5) zur Schweisselektrode (12) automatisch durchgeführt wird.

5. Vorrichtung zum Zusammenfügen einzelner Bauelemente durch Löten oder Schweissen mit vorhergehendem Zusammenheften der Bauteile mittels Widerstandsschweissen mit Zusatzwerkstoffen wobei eine stiftförmige Schweisselektrode (12) mit einem axialen Mittelkanal (14) vorgesehen ist, dadurch gekennzeichnet, dass die Elektrode mit einer Vakuumpumpe verbunden ist, und deren schweissseitiges Ende (13) eine der Kugelform angepasste Positionierfläche für eine angesaugte Kugel (5) aufweist.

## Claims

1. Method for joining together individual structural elements by brazing or welding with preceding fastening together of the structural parts by means of resistance welding with additional materials, characterized in that by means of a hollow welding electrode (12) spherical fastening material (5) is removed by underpressure from a supply container, is supplied to the fastening point and is fused there by means of the passage of current.

2. Method according to claim 1, characterized in that before the fastening process, one or several spacer foil sections (4) are carried in a provided aperture of the structural elements (1, 23) to be joined together, and the structural elements (1, 2, 3) are fixed in the intended position.

3. Method according to claim 2, characterized in that the spacer foil (4) is constructed as brazing foil and after the fastening process the structural parts (1, 23) are connected completely by increase in temperature.

4. Method according to claims 1 to 3, characterized in that the supply of the fastening material (5) to the welding electrode (12) is carried out automatically.

5. Device for joining together individual structural elements by brazing or welding with preceding fastening together of the structural parts by means of resistance welding with additional materials, whereby a pin-shaped welding electrode (12) is provided with an axial middle channel (14), characterized in that the electrode is connected to a vacuum pump, and its welding-side end (13) has a positioning surface, adapted to the spherical form, for a drawn-in ball (5).

## Revendications

1. Procédé pour réunir des éléments de construction, séparés, par brasure ou soudure, avec accrochage préalable des éléments par soudage ou par points utilisant des matériaux accessoires, caractérisé en ce qu'à l'aide d'une électrode de soudage (12), creuse, on prend un matériau d'accrochage (5) en forme de bille par dépression dans un réservoir d'alimentation, on transfert ce matériau jusqu'au point d'accrochage et on le fait fondre à cet endroit par passage de courant électrique.

2. Procédé selon la revendication 1, caractérisé en ce qu'avant la phase d'accrochage, on place dans un intervalle prédéterminé des éléments de construction à réunir (1, 23), un ou plusieurs segments de feuilles d'écartement (4) et on fixe les éléments de construction (1, 2, 3) dans la position prévue.

3. Procédé selon la revendication 2, caractérisé en ce que la feuille d'écartement (4) est une feuille de brasure et après la phase d'accrochage, on réunit de manière définitive les éléments de construction (1, 23) par élévation de température.

4. Procédé selon les revendications 1 à 3, caractérisé en ce que le matériau d'accrochage (5) jusqu'à l'électrode de soudage (12) se fait automatiquement.

5. Dispositif pour réunir des éléments de construction séparés, par brasure ou soudure avec accrochage préalable des éléments de construction par soudage par résistance, à l'aide de matériaux additifs, avec une électrode de soudage (12) en forme de tige représentant un canal axial (14), caractérisé en ce que l'électrode est reliée à une pompe à vide et son extrémité (13) située du côté de la soudure présente une surface de positionnement adaptée à la forme sphérique pour une bille (5) aspirée.

FIG.1

EP 0 259 718 B1

FIG.2

FIG. 3

EP 0 259 718 B1